# EUROPÄISCHE PATENTANMELDUNG

(11) **EP 1 004 499 A2**
(43) Veröffentlichungstag der Anmeldung: **31.05.2000**
(21) Anmeldenummer: 99122981.6
(22) Anmeldetag: 19.11.1999
(51) Int. Cl.: B62D 43/08

(54) **Reserveradanordnung in einem Fahrzeug**

(30) Priorität: 27.11.1998 DE 19854761
(71) Anmelder: AUDI AG, 85045 Ingolstadt (DE)
(72) Erfinder: Leilich, Martin, 85080 Gaimersheim (DE)

(57) **Zusammenfassung**

Die Erfindung betrifft eine Anordnung eines Reserverades (13) innerhalb eines als Knautschzone ausgelegten Endbereiches eines Fahrzeuges. Um das Knautschverhalten dieses Endbereiches des Fahrzeuges nicht negativ zu beeinflussen, sind bei derartigen Anordnungen Stelleinrichtungen zur Lageänderung des Reserverades (13) vorgesehen, die durch unfallbedingte Verformung der Knautschzone antreibbar sind. Mit relativ geringem konstruktiven Aufwand erhält man erfindungsgemäß eine derartige Einrichtung dann, wenn die Stelleinrichtung als eine in dem Bereich (1) befestigte Reserveradhalterung (2) gebildet ist. Diese ist so am Aufbau des Fahrzeuges gehalten, daß ihre Lage und/oder Gestalt durch unfallbedingte Verformung der Knautschzone veränderbar ist und damit das Reserverad aus seiner normalen Ablagestellung herausbewegt werden kann.

## Beschreibung

Die Erfindung betrifft die Anordnung eines Reserverades innerhalb eines als Knautschzone ausgelegten Bereiches eines Fahrzeugs gemäß dem Oberbegriff des Patentanspruches 1.

Es ist allgemein bekannt, daß durch ein in einem verformbaren Endbereich untergebrachtes Reserverad das Verformungsverhalten dieses Endbereiches bei einem Fahrzeugunfall negativ beeinflußt oder zumindest teilweise beeinträchtigt werden kann. Der luftgefüllte Reifen des Reserverades ist nämlich formstabil und überträgt die in das Fahrzeug eingeleitete Aufprallkraft ohne nennenswerte Energieabsorption auf benachbarte Teile des Fahrzeugaufbaus. Zur Behebung dieses Problems sind im Stand der Technik Lösungen entwickelt worden, mit denen das Reserverad während der Verformung der Knautschzone aus seiner Ausgangslage herausbewegt wird, um so die Energieabsorption innerhalb des Endbereiches des Fahrzeugs nicht zu beeinflussen. Diesbezüglich wird auf die Schriften DE 26 21 922 (B 62 D 43/04), DE 28 27 855-C2 (B 62 D 43/10), DE-OS 20 45 630 (B 60 K 15/02) hingewiesen. Ferner ist aus der DE 36 07 745-C1 (B 60 R 21/02) eine Reserveradanordnung bekannt geworden, bei der im Falle einer aufprallbedingten Verformung der Karosserie in der Nähe des Reserverades ein Stechwerkzeug so in Wirkstellung gebracht wird, daß durch Zerstörung des mit Luft gefüllten Reifens Verformungsweg freigegeben wird.

Vor diesem Hintergrund liegt der Erfindung die Aufgabe zugrunde, gattungsgemäße Anordnungen hinsichtlich ihres Aufbaus zu vereinfachen.

Diese Aufgabe wird gelöst mit einer Anordnung gemäß den Merkmalen des Patentanspruches 1. Die Unteransprüche betreffen besonders zweckmäßige Weiterbildungen der Erfindung.

Erfindungsgemäß wird also zur Lageänderung des Reserverades eine im Bereich der Knautschzone befestigte Reserveradhalterung vorgesehen, die durch unfallbedingte Verformung der Knautschzone in ihrer Lage und/oder Gestalt so verändert werden kann, daß das Reserverad aus der Normalstellung heraus in eine Sicherheitsstellung hineinbewegbar ist. Es wird also aus der Verformung in der Knautschzone eine auf das Reserverad einwirkende Verstellbewegung herausgeholt, ohne daß der Knautschvorgang als solcher negativ beeinflußt wird. Durch eine geschickte Auslegung der Reserveradhalterung kann diese selbst sogar Beiträge zur Energieabsorption liefern.

Ein weiterer Vorteil der erfindungsgemäßen Lösung ist darin zu sehen, daß sie in bestehende Fahrzeugkonzepte eingebunden werden kann, ohne daß nennenswerte Konstruktionsänderungen an Karosserieteilen notwendig werden. Hervorzuheben ist auch, daß über die Reserveradhalterung das Reserverad selbst während der Lageänderung definiert geführt wird und nicht unkontrolliert vom Fahrzeug losgelöst umherfliegen kann.

Der bevorzugte Anwendungsfall ist eine Reserveradhalterung für aufrecht in einem Kofferraum oder Laderaum neben einem Radhaus stehende Reserveräder. Grundsätzlich ist aber eine Integration der erfindungsgemäßen Reserveradhalterung auch in Mulden von liegend angeordneten Ersatzrädern unterhalb der Kofferraumauskleidung möglich.

Ein fertigungstechnisch besonders leicht realisierbarer Aufbau ergibt sich für eine Reserveradhalterung, die nach Art eines in Anspruch 2 näher beschriebenen Stabes ausgeführt ist. Die Herstellung eines solchen Stabes ist relativ einfach. Außerdem lassen sich durch definiert eingebrachte Sollknickstellen sehr genau einstellbare Kinematiken für die Lageänderung des Reserverades erzeugen. Von herausgehobener Bedeutung ist in diesem Zusammenhang auch, daß ein solcher Stab kaum Bauraum in Anspruch nimmt und somit insbesondere für im Kofferraum oder Laderaum untergebrachte Ersatzräder das Ladevolumen des Fahrzeugs nicht zusätzlich eingeschränkt wird. Ein weiterer Nutzen kann beispielsweise noch dadurch gewonnen werden, daß ein solcher Stab auch zur Befestigung von Haltenetzen nutzbar ist, die von dem Stab überspannte Mulden im Seitenwandbereich des Fahrzeugs abgrenzen.

Ein besonders vorteilhaftes Ausführungsbeispiel der Erfindung ist in der Zeichnung dargestellt. Es zeigt:
- Figur 1:: in einer Draufsicht einen Ausschnitt aus einem hinteren Endbereich eines Fahrzeuges,
- Figur 2:: eine Ansicht gemäß Pfeil II in Figur 1,
- Figur 3:: eine Ansicht gemäß Pfeil III in Figur 1,
- Figur 4:: eine Alternativlösung zu dem in Figur 3 dargestellten Detail.

Gleiche Bauteile beziehungsweise Bauteilabschnitte weisen in allen Figuren die gleiche Bezifferung auf.

Von einem insgesamt mit 1 bezeichneten Heckbereich eines Fahrzeugs sind hier die für die Erfindung wesentlichen Elemente eine Reserveradhalterung 2, ein Radhaus 3, ein Heckabschlußteil 4 sowie ein von diesem beaufschlagbarer Aufnahmebock 5. Letzterer kann mittelbar oder unmittelbar mit dem Heckabschlußblech 4 verbunden sein. Über eine erste Verstärkung 6 ist die hier stabförmig ausgeführte Reserveradhalterung 2 im Bereich eines ersten Endes 7 an dem Radhaus 3 befestigt. Zur Bereitstellung einer später noch zu beschreibenden Scharnierfunktion ist an diesem ersten Ende 7 der Reserveradhalterung 2 als Sollbiegestelle eine Knicklasche 8 vorgesehen, die mit der Verstärkung 6 beispielsweise durch Verschweißen verbunden ist. Im Bereich eines zweiten Endes 9 ist die Reserveradhalterung 2 über eine zweite Verstärkung 10 mit dem Aufnahmebock 5 verbunden. Zwischen den beiden Enden 7 und 9 befindet sich zum einen eine als Quersicke ausgebildete Sollknickstelle 11 und zum anderen ein Befestigungshebel 12, an dem ein Reserverad 13 zur geordneten Unterbringung in einem hier nur ausschnittsweise gezeigten Laderaum 14 befestigt ist. Die Begrenzung des Laderaums 14 nach vorn erfolgt durch eine hier nur schematisch angedeutete Rücksitzbank 15. Mit strichpunktierten Linien angedeutet ist ferner eine Innenauskleidung 16, die sich von der Rückbank 15 bis zum Heckabschluß 4 erstreckt. Im Bereich der Sollknickstelle 11 ist das hier U-förmige Querschnittsprofil der Reserveradhalterung 2 ausgespart.

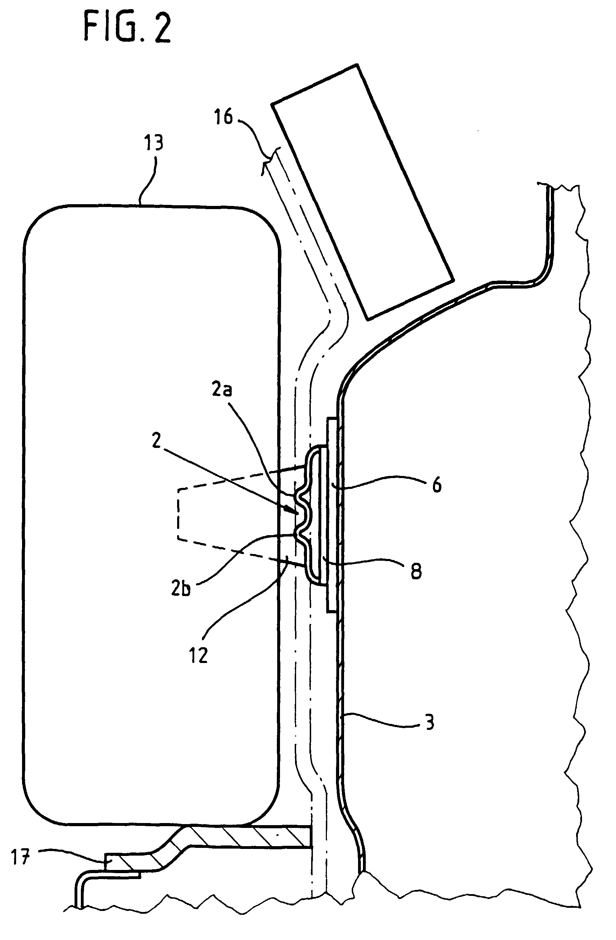

Aus der Ansicht in Figur 2 wird deutlich, daß die Reserveradhalterung 2 am Radhaus 3 so angeordnet ist, daß das Reserverad 13 auf einer Bodenmatte 17 abstützbar ist. Die Gewichtskräfte des Reserverades 13 werden also in erster Linie vom Fahrzeugboden aufgenommen. Demgegenüber dient die Befestigung an der Reserveradhalterung 2 hauptsächlich der Fixierung in seitlicher Richtung. Auf diese Weise kann die hier mit Längssicken (2a und 2b) im Querschnitt ausgeführte Reserveradhalterung 2 relativ kleinbauend realisiert werden. Ihre Stabilität ist nur an den für die Verschwenkung des Reserverades 13 erforderlichen Kräften orientiert und nicht etwa auszulegen auf eine häufig mit Schwingungen belastete Abstützung von Gewichtskräften des Reserverades 13. Insgesamt ist hier die Lage des Reserverades 13 so gewählt, daß seine Drehachse in etwa kollinear zu denjenigen der Antriebsräder ausgerichtet ist.

Abweichend von dem in der Zeichnung dargestellten Ausführungsbeispiel kann alternativ zum Befestigungshebel 12 zur Befestigung des Reserverades 13 in der Reserveradhalterung 2 lediglich ein Gewinde vorgesehen sein, in das dann eine das Reserverad 13 gegen die Reserveradhalterung 2 festlegende Schraube eindrehbar ist.

Bei einer Beaufschlagung des Heckbereiches 1 mit der Aufprallkraft F wird in einer hier nicht weiter dargestellten Knautschzone eine Verformung erzeugt, die beispielsweise auch zu einer Verlagerung des Aufnahmebockes 5 in die mit dünnen Linien dargestellte Position führt. Aufgrund der Schräganstellung des zweiten Endes 9 erfolgt dann über die Sollknickstelle 11 eine definierte Einwärtsbewegung der Reserveradhalterung 2 in Richtung des Pfeiles 18, also zur Mitte des Laderaums 14 hin. Diese Einwärtsbewegung wiederum verursacht eine Lageänderung des Reserverades 13 aus dem Heckbereich 1 des Fahrzeuges heraus in Richtung auf die Rückbank 15 zu. Damit kann das Reserverad 13 das Verformungsverhalten des Heckbereiches 1 nicht weiter beeinflussen. Wichtig in diesem Zusammenhang ist auch, daß eine relativ kleine Schräganstellung des zweiten Endes 9 ausreichend ist, weil bei einer bereits erfolgten Schräganstellung des Reserverades 13 in der Anfangsphase des Aufpralls die weitere Intrusion des Heckbereiches 1 eine problemlose Verschiebung des Reserverades 13 in den Laderaum 14 hinein ermöglicht.

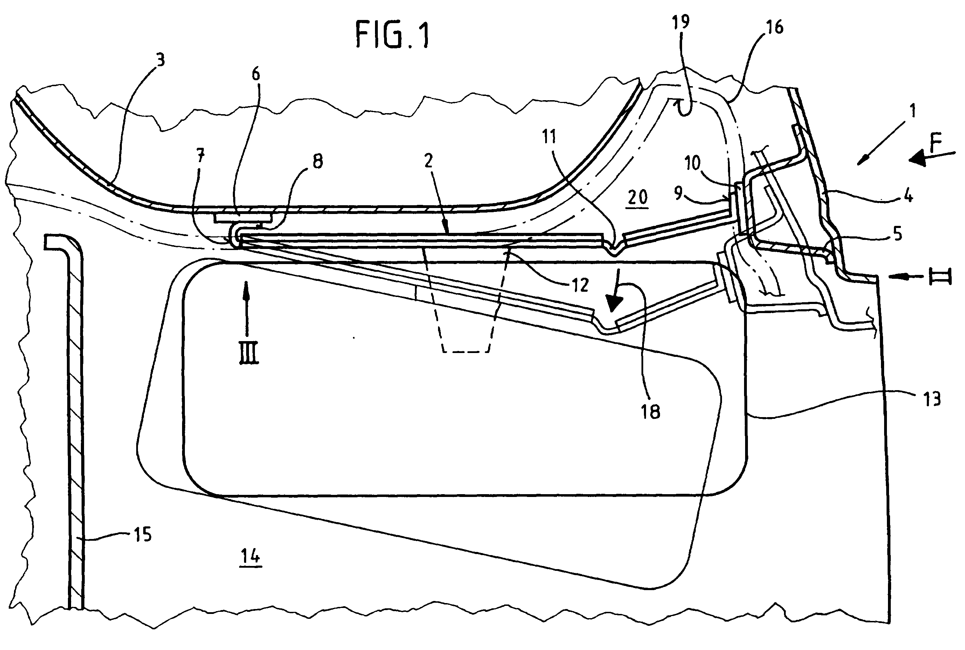

Aus der Ansicht in Figur 1 wird deutlich, daß durch die Reserveradhalterung 2 kaum Bauraum gebraucht wird. Die Ladebreite des Laderaumes 14 wird also kaum beeinträchtigt. Gemäß einer besonders vorteilhaften Weiterbildung der Erfindung kann die Reserveradhalterung 2 auch als Spannsteg für ein hier nicht weiter dargestelltes Haltenetz gewählt werden, das dann zusammen mit einer Muldenwandung 19 der Innenauskleidung 16 ein kleines Staufach 20 erzeugt. Es ergibt sich somit noch ein Zusatznutzen im Hinblick auf die Unterbringung von Kleinteilen im Laderaum 14.

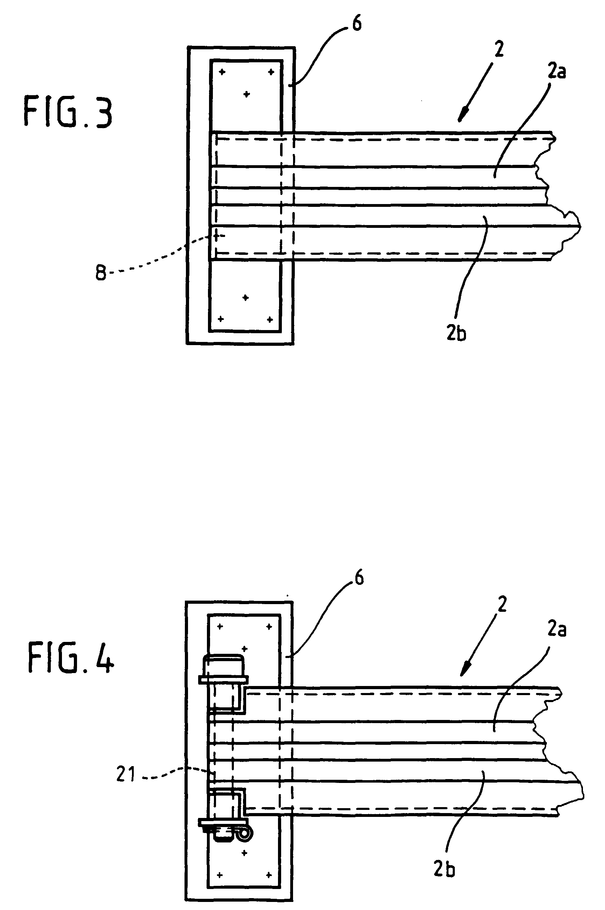

Für eine besonders leichtgängige Verschwenkung des Reserverades 13 kann im Bereich des ersten Endes 7 auch ein Zapfengelenk 21 vorgesehen sein, wie es in Figur 4 schematisch angedeutet ist. Eine solche Anordnung kann besonders dann von Bedeutung sein, wenn für die Anbringung des ersten Endes 7 gemäß Figur 3 im Bereich der Radhausschale keine ausreichende Festigkeit erreicht werden kann. Sicherzustellen ist nämlich, daß zur Erzeugung der definierten Schwenkbewegung des Reserverades 13 die Befestigung des ersten Endes 7 nicht abreißt.

Die Erfindung ist nicht auf die in der Zeichnung dargestellten Einbausituationen beschränkt. Vorstellbar ist auch eine erfindungsgemäße Reserveradhalterung, die in einer das Reserverad 13 liegend aufnehmenden Mulde angeordnet ist. Das Reserverad 13 würde dann unter der Kofferbodenmatte 17 liegend nach oben schräg aufwärts in den Laderaum 14 hinein bewegt und so eine einwandfreie Verformung des Heckbereiches ermöglichen. Ebenso können auch im Frontbereich eines Fahrzeugs untergebrachte Reserveräder mit einer erfindungsgemäßen Reserveradhalterung gesichert werden.

## Patentansprüche

1. Anordnung eines Reserverades (13) innerhalb eines als Knautschzone ausgelegten Bereiches (1) eines Fahrzeugs mit wenigstens einer durch unfallbedingte Verformung der Knautschzone (1) antreibbaren Steileinrichtung zur Lageänderung des Reserverades (13), dadurch gekennzeichnet, daß die Stelleinrichtung als eine in dem Bereich (1) befestigte Reserveradhalterung (2) gebildet ist, deren Lage und/oder Gestalt durch die unfallbedingte Verformung der Knautschzone veränderbar ist.

2. Anordnung nach Anspruch 1, dadurch gekennzeichnet, daß die Reserveradhalterung (2) nach Art eines Stabes gebildet ist, der
- mit wenigstens einem Ende (9) an einem vorgegebenen Abschnitt (4, 5) der Knautschzone befestigt ist,
- mit einem anderen Ende (7) an einem weiteren Abschnitt der Knautschzone oder an einem fahrzeugfesten Aufbauteil (3) außerhalb der Knautschzone befestigt ist,
- zwischen den Enden (7, 9) wenigstens einen Sollknickbereich (11) und wenigstens ein Mittel (12) zur Anbindung des Reserverades (13) an der Reserveradhalterung (2) aufweist.

3. Anordnung nach Anspruch 2, dadurch gekennzeichnet, daß wenigstens eines der Enden (7, 9) an einem der Abschnitte oder an dem fahrzeugfesten Aufbauteil angelenkt ist.

4. Anordnung nach Anspruch 3, dadurch gekennzeichnet, daß das wenigstens eine Ende (7 oder 9) über eine Sollbiegestelle (8) angelenkt ist.

5. Anordnung nach Anspruch 3, dadurch gekennzeichnet, daß das wenigstens eine Ende (7 oder 9) über ein Zapfengelenk (21) angelenkt ist.

6. Anordnung nach Anspruch 2, dadurch gekennzeichnet, daß ein erster Abschnitt zur Befestigung der Reserveradhalterung (2) durch ein Heckabschlußblech (4) gebildet ist.

7. Anordnung nach Anspruch 2 oder 6, dadurch gekennzeichnet, daß ein zweiter Abschnitt durch ein Radhaus (3) gebildet ist.

8. Anordnung nach Anspruch 6 oder 7, dadurch gekennzeichnet, daß die Befestigung über Verstärkungsplatten (6, 10) erfolgt, die auf Blechpartien der Abschnitte aufgesetzt sind.

9. Anordnung nach Anspruch 1, dadurch gekennzeichnet, daß das Reserverad in einer Normallage innerhalb eines Laderaumes (14) oder Kofferraumes des Fahrzeuges aufrecht stehend mit einer in etwa kollinearen Ausrichtung seiner Drehachse zu denjenigen der Räder des Fahrzeuges gehalten ist.

10. Anordnung nach den Ansprüchen 7 und 9, dadurch gekennzeichnet, daß das Reserverad (13) neben dem Radhaus (3) angeordnet ist und durch unfallbedingte Lage- und/oder Gestaltänderung der Reserveradhalterung (2) in Richtung Mitte des Laderaums (14) oder Kofferraums verlagerbar ist.

11. Anordnung nach Anspruch 2, dadurch gekennzeichnet, daß der Stab auf einem überwiegenden Teil seiner Längenausdehnung ein U-förmiges Querschnittsprofil aufweist.

12. Anordnung nach Anspruch 11, dadurch gekennzeichnet, daß im Bereich der Sollknickstelle (11) das U-förmige Querschnittsprofil ausgespart ist.

13. Anordnung nach den Ansprüchen 2 oder 12, dadurch gekennzeichnet, daß der Sollknickbereich (11) durch eine Quersicke gebildet ist.

14. Anordnung nach Anspruch 2, dadurch gekennzeichnet, daß der Stab auf einem überwiegenden Teil seiner Längenausdehnung wenigstens eine Längssicke (2a, 2b) aufweist.
